# EUROPEAN PATENT APPLICATION

(11) **EP 4 769 126 A1**
(43) Date of publication of application: **01.07.2026**
(21) Application number: 25226843.8
(22) Date of filing: 23.12.2025
(51) Int. Cl.: G06F 8/75, G06F 8/74, G06F 8/10, G06N 5/022, G06N 20/00, G06F 8/51

(54) **AI BASED MODERNIZATION OF LEGACY APPLICATIONS THROUGH ONTOLOGY DRIVEN KNOWLEDGE EXTRACTION AND RELEARNING**

(30) Priority: 24.12.2024 IN 202441102848
(71) Applicant: Mphasis Limited, 560048 Karnataka (IN)
(72) Inventor: RAKESH, Nitin, New York, NY 10020 (US); NAIR, Anup, Skillman, NJ 08558 (US); NAIR, Suresh, Princeton, NJ 08540 (US); VAINCE, Muhammad Atta Ul Haleem, Boulder, CO 80305 (US); ANTIVACKIS, Patrick, 28100 Dreux (FR); KUMAR, Atul, 8851101 Begusarai (IN); GINJUPALLI, Paramesh, 522019 Guntur (IN); CHOUDHURY, Vivek, 560077 Bangalore (IN)
(74) Representative: Potter Clarkson

(57) **Abstract**

A system (100) and method for AI-based modernization of legacy applications through ontology driven knowledge extraction and relearning is provided. First and second input type is processed using preconfigured LLM agent. Knowledge graph representing semantics and implemented rules of the legacy application is generated using first and second input types and summaries of first and second input types. Relearning operation is performed to determine implemented rules from first input type using first prompt type and to generate data dictionary by executing a multi-step workflow. Workflows are derived from first and second input types by extracting semantic and syntactic relationships across the first and second input types. Knowledge graph, implemented rules, workflows and data dictionary are employed for downstream modernization activities associated with first input type.

## Description

### Field of the invention

The present invention relates generally to the field of modernization of legacy applications. More particularly, the present invention relates to an artificial intelligence-based modernization of legacy applications through ontology driven knowledge extraction and relearning.

### Background of the invention

Modernization of legacy applications typically involves migrating legacy applications to modern target applications to enhance performance efficiency. There is a need for modernization, as legacy applications are often costly to operate, difficult to maintain, and incompatible with modern technologies. Furthermore, legacy applications are often built on outdated technologies and programming languages which present significant challenges. These challenges include a shortage of skilled developers proficient in legacy technologies which result in difficulties with maintenance and updates. Additionally, legacy applications often feature a rigid architecture that hinders rapid adaptation to evolving organizational requirements and adoption of new technologies. In the current landscape of increasing cyber threats, legacy systems are particularly susceptible to security breaches and often fail to comply with industry regulations. Furthermore, the inability of legacy applications to leverage modem technologies and platforms restrict organizational growth and stifle innovation.

However, modernization of legacy applications is often a complex and technically challenging process. It has been observed that migrating complex legacy applications to modern target environments frequently results in loss of semantic equivalence, meaning that original functionality and intent of the legacy application is not fully preserved. Typically, modernization approaches rely on non-transparent, direct code-to-code transformations across different programming languages, which obscures logic and structure of original application. Moreover, these processes frequently fail to leverage existing documentation and artifacts related to legacy applications, thereby overlooking valuable insights that enhance relearning process and ensure more accurate modernization. In addition, modernization initiatives are often limited to a single platform for entire lifecycle including knowledge extraction, target application generation, and deployment which results in operational inefficiencies and hinder overall progress throughout modernization process.

Furthermore, current application modernization techniques are often error-prone, inefficient, and costly. Many existing modernization tools require extensive manual analysis of legacy application code, particularly for large codebases (e.g., those exceeding 10 million lines of code), making the process highly time-consuming and labor-intensive. Moreover, these tools often lack flexibility and adaptability necessary for effective application modernization as the tools typically rely on rigid, predefined rules and heuristics that fail to adequately address unique characteristics and complexities inherent in legacy code.

In light of the aforementioned drawbacks, there is a need for a system and a method which enables modernization of legacy applications in an efficient manner. Also, there is a need for a system and a method which provides for maintaining semantic equivalence during modernization of legacy applications. There is a need for a system and a method which provides complete transparency into re-learning process for legacy application modernization. Further, there is a need for a system and a method which provides for transforming complex legacy applications into modernized applications with a high degree of accuracy. Furthermore, there is a need for a system and a method for efficient management and updating of legacy applications. Yet further, there is a need for a system and a method which provides for maintaining security of the modernized applications. Also, there is a need for a system and a method which provides for fast and cost-effective modernization of legacy applications. Yet further, there is a need for a system and a method which provides flexibility in the legacy application modernization process.

### Summary of the invention

In various embodiments of the present invention, a system 100 for artificial intelligence-based modernization of legacy applications through ontology driven knowledge extraction and relearning is provided. The system 100 comprises a memory 108 storing program instructions, a processor 106 executing program instruction stored in the memory 108 and a knowledge base building engine 104 executed by the processor 106. The knowledge base building engine 104 is configured to process a first input data and a second input data using a pre-configured Large Language model (LLM) agent. The first and second input types are retrieved via an Input/Output unit 110 from different data sources. Further, the knowledge base building engine 104 generates a knowledge graph representing semantics and implemented rules of the legacy application using the first input type and the second input type and first and second summaries of the first input type and second input type. Furthermore, the knowledge base building engine 104 performs a relearning operation to determine implemented rules from the first input type using a first prompt type and generate a data dictionary from the first input type by executing a multi-step workflow. The knowledge base building engine 104 is further configured to derive workflows from the first input type and second input type by extracting syntactic and semantic relationships across the first input type and second input type. Lastly, the knowledge base building engine 104 employs the knowledge graph, the implemented rules, the workflows and the data dictionary for enabling downstream modernization activities associated with the first input type.

In various embodiments of the present invention, a method for artificial intelligence-based modernization of legacy applications through ontology driven knowledge extraction and relearning is provided. The method is implemented by a processor 106 executing instructions stored in a memory 108. The method comprises processing a first input data and a second input data using a pre-configured LLM agent. The first and second input types are retrieved via an Input/Output unit 110 from different data sources. The method comprises generating a knowledge graph representing semantics and implemented rules of the legacy application using the first input type and the second input type and first and second summaries of the first input type and second input type. Furthermore, the method comprises performing a relearning operation to determine implemented rules from the first input type using a first prompt type and generate a data dictionary from the first input type by executing a multi-step workflow. The method further comprises deriving workflows from the first input type and second input type by extracting syntactic and semantic relationships across first input type and second input type. Lastly, the method comprises employing the knowledge graph, the implemented rules, the workflows and the data dictionary for enabling downstream modernization activities associated with the first input type.

### Brief description of the accompanying drawings

The present invention is described by way of embodiments illustrated in the accompanying drawings wherein:
FIG. 1 is a detailed block diagram of an artificial intelligence-based system for enabling modernization of legacy applications through ontology driven knowledge extraction and relearning, in accordance with an embodiment of the present invention;
FIG. 2 illustrates a screenshot of a User Interface (UI) depicting rendering of one or more knowledge graphs, in accordance with an embodiment of the present invention;
FIG. 3 illustrates an artificial intelligence-based method for enabling modernization of legacy applications through ontology driven knowledge extraction and relearning, in accordance with an embodiment of the present invention; and
FIG. 4 illustrates an exemplary computer system in which various embodiments of the present invention may be implemented.

### Detailed description of the invention

In various embodiments, the present invention provides for building a knowledge base which comprises data associated with various inputs related to legacy application code and artifacts associated with legacy application code. The knowledge base interfaces with the external tools for consumption of data present in the knowledge base for enabling modernization of legacy applications. The present invention employs trained Large Language Models (LLMs) that understand and interpret legacy application code with high precision. The present invention implements a hybrid re-learning technique by combining LLMs with language parser-based deterministic tools to extract valuable insights from both legacy application code and non-code artifacts to provide deeper understanding of the legacy application's architecture, functionality, and dependencies for enabling modernization of legacy application code.

The disclosure is provided in order to enable a person having ordinary skill in the art to practice the invention. Exemplary embodiments herein are provided only for illustrative purposes and various modifications will be readily apparent to persons skilled in the art. The general principles defined herein may be applied to other embodiments and applications without departing from the scope of the invention. The terminology and phraseology used herein is for the purpose of describing exemplary embodiments and should not be considered limiting. Thus, the present invention is to be accorded the widest scope encompassing numerous alternatives, modifications, and equivalents consistent with the principles and features disclosed herein. For purposes of clarity, details relating to technical material that is known in the technical fields related to the invention have been briefly described or omitted so as not to unnecessarily obscure the present invention.

The present invention would now be discussed in context of embodiments as illustrated in the accompanying drawings.

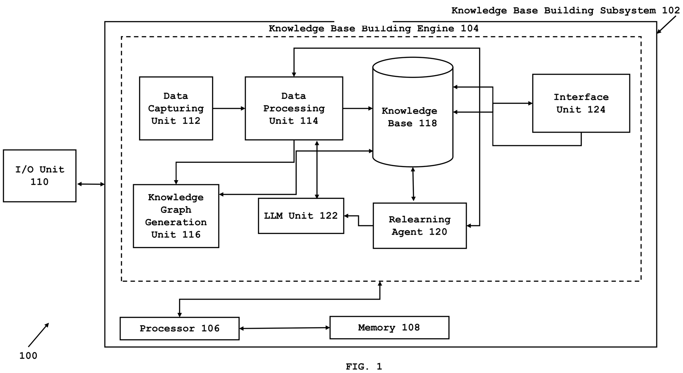

FIG. 1 is a detailed block diagram of an Artificial Intelligence (AI)-based system 100 for enabling modernization of legacy applications through ontology driven knowledge extraction and relearning, in accordance with various embodiments of the present invention. Referring to FIG. 1, in an embodiment of the present invention, the system 100 comprises a knowledge base building subsystem 102 (subsystem 102), and an input/output (I/O) unit 110. In an exemplary embodiment of the present invention, the I/O unit 110 is an electronic device such as a computer or a laptop. The I/O unit 110 is connected to the subsystem 102 via a communication channel (not shown). The communication channel (not shown) may include, but is not limited to, a physical transmission medium, such as, a wire, or a logical connection over a multiplexed medium, such as, a radio channel in telecommunications and computer networking. Examples of radio channel in telecommunications and computer networking may include, but are not limited to, a local area network (LAN), a metropolitan area network (MAN) and a wide area network (WAN).

In an embodiment of the present invention, the subsystem 102 is equipped with an integrated Gen AI mechanism configured for building a knowledge base comprising data associated with various inputs, including legacy application code, artifacts associated with the legacy application code, test case data, and use case data. The subsystem 102 enables external tools to access and utilize information stored in a knowledge base 118 to facilitate the modernization of legacy applications. Modernization of legacy applications typically involves migrating the legacy application code to a target application code. The subsystem 102 leverages advanced, trained LLMs configured for accurately understanding and interpreting legacy application code. Additionally, the subsystem 102 employs a hybrid ontology driven re-learning technique that combines LLMs with language parser-based deterministic tools to extract valuable insights from both legacy application code and non-code artifacts. The re-learning technique provides a comprehensive understanding of the legacy application's architecture, functionality, and dependencies, thereby enabling effective modernization of the legacy application code.

In an embodiment of the present invention, the subsystem 102 comprises a knowledge base building engine 104 (engine 104), a processor 106, and a memory 108. In various embodiments of the present invention, the engine 104 has multiple units which work in conjunction with each other for building the knowledge base which can be leveraged by various external tools to carry out modernization of legacy applications through ontology driven knowledge extraction and relearning. The various units of the engine 104 are operated via the processor 106 specifically programmed to execute instructions stored in the memory 108 for executing respective functionalities of the units of the engine 104 in accordance with various embodiments of the present invention.

In another embodiment of the present invention, the subsystem 102 may be implemented in a cloud computing architecture in which data, applications, services, and other resources are stored and delivered through shared datacenters. In an exemplary embodiment of the present invention, the functionalities of the subsystem 102 are delivered to a user as Software as a Service (SaaS) or Platform as a Service (PaaS) over a communication network.

In another embodiment of the present invention, the subsystem 102 may be implemented as a client-server architecture or in an application-based environment. In this embodiment of the present invention, a client terminal accesses a server hosting the subsystem 102 over a communication network. The client terminals may include but are not limited to a smart phone, a computer, a tablet, microcomputer or any other wired or wireless terminal. The server may be a centralized or a decentralized server.

In an embodiment of the present invention, the engine 104 comprises a data capturing unit 112, a data processing unit 114, a knowledge graph generation unit 116, a relearning agent 120, a LLM unit 122, an interface unit 124 and the knowledge base 118. The interface unit 124 is a multi-functional unit which enables integration of the subsystem 102 with various external tools for usage in modernization of legacy application codes. The external tools include, but are not limited to, an agile tool, one or more Software Development Life Cycle (SDLC) tools, and a forward engineering LLM agent.

In operation, in an embodiment of the present invention, the data capturing unit 112 is configured to retrieve one or more inputs via the I/O unit 110 from different data sources. The one or more inputs include a first input type and a second input type. In an exemplary embodiment of the present invention, the first input type is in structured and semi structured data format, including source code files such as COBOL files, .cpy files, .jcl files, and other formats associated with the legacy application code (or source code applications). The I/O unit 110 may be used by a user (e.g., a developer, an analyst, etc.), for uploading the source code files via a User Interface (UI) rendered on the I/O unit 110. The second input type is in an unstructured data format and comprises one or more artifact files associated with the source code, which provides insights on the working of the source code application. The artifact files may include, but are not limited to, PDF files, text files, documents, transcripts, and test case files.

In an embodiment of the present invention, the data processing unit 114 is configured to independently process the first input type and the second input type received from the data capturing unit 112. The data processing unit 114 utilizes a pre-configured LLM agent, associated with the LLM unit 122, to process both the first input type and the second input type. In an example, the LLM agent may include, but is not limited to, Gemini^{®} and Claude^{®}. In an exemplary embodiment of the present invention, asynchronous and multithreading techniques are employed to efficiently execute LLM agent-based operations. The LLM agent processes a set of predefined prompts which are provided via the I/O unit 110 to facilitate processing of the first input type and the second input type. Based on the set of pre-defined prompts, the first and the second input types are processed in a pre-defined manner for generating a pre-defined output from the LLM agent.

In an embodiment of the present invention, if the files associated with the first input type and the second input type are small in size, then the LLM agent is configured to directly process the first input type and the second input type. In another embodiment of the present invention, if the files associated with the first input type and the second input type are large in size, then the LLM agents process the first input type and the second input type by carrying out a partitioning operation on content of the files by employing the pre-defined prompts for segmenting the first input type and the second input type.

In an embodiment of the present invention, the LLM agent uses the segmented first input type and the second input type for generating summaries of the first input type and the second input type (first summary). The generated summary of the first input type and the second input type is transmitted to a vector database (vector DB) associated with the knowledge base 118 for storage in a vectorized form. In another embodiment of the present invention, the second input type is processed separately for extracting information as data including, but not limited to, tables, images, diagrams present therein and provided to a different LLM agent for generating a second summary. The generated second summary is stored with the first summary of the first input type and the second input type in the vector DB associated with the knowledge base 118.

In an embodiment of the present invention, the knowledge graph generation unit 116 is configured to receive the processed first input type and the second input type from the data processing unit 114 along with a pre-defined domain standards data which includes data related to compliance and regulatory best practices associated with the first input type. The knowledge graph generation unit 116 also receives the first and second summaries of the first input type and the second input type from the knowledge base 118. The knowledge graph generation unit 116 converts the first input type and the second input type and the first and second summaries of the first input type and the second input type into a knowledge graph by implementing LLM agents present in the LLM unit 122 based on the pre-defined prompts provided via the I/O unit 110.

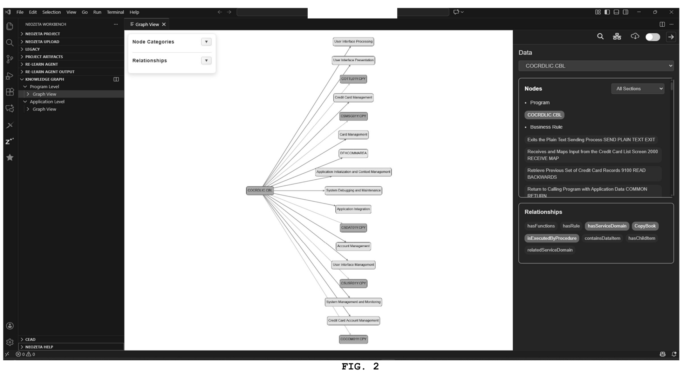

In an embodiment of the present invention, the knowledge graph comprises a representation of semantics of the first input type and implemented rules associated with the first input type. In an example, the implemented rules comprise all the constraints and requirements to implement software functions. The knowledge graph provides unified visualization of insights, key features and relationships within the first input type and the second input type in a subject, object, and/or predicate form. In an example, the knowledge graph captures entities and relationships with semantic meaning which enable users to generate inferences and draw actionable insights related to a legacy application source code's architecture, components, relationships, functionalities and artifacts. Further, the generated knowledge graph may be visualized by the user via the UI on the I/O unit 110, as illustrated in Fig. 2. In an exemplary embodiment of the present invention, the user may interact with the knowledge graph using a user-friendly application user interface rendered via the I/O unit 110 employing Application Programming Interfaces (APIs) to provide consistency in accessing whole or a subset of knowledge graph.

Further, one or more autonomous chat bots and/or AI agents may interact with the knowledge graph via the APIs. The user may provide one or more queries related to the first input type in a natural language format via the application user interface and thereafter detailed and contextually relevant answers to the user queries are generated by the knowledge graph generation unit 116 using LLM agents. Advantageously, the knowledge graph generation unit 116 analyses and processes the first input type and the second input type from diverse sources for providing comprehensive and accurate support to users for efficiently gaining the insights of the application. In an embodiment of the present invention, the knowledge graph generation unit 116 retrieves the most relevant knowledge graph with respect to the pre-defined prompt by carrying out a similarity search operation with a top k-parameter and ranks the best document associated with the knowledge graph based on a similarity score. The knowledge graph generation unit 116 reorders the stored knowledge graph based on the similarity score for rendering the best output. In an exemplary embodiment of the present invention, the knowledge graph is stored in a turtle format in the knowledge base 118. In another exemplary embodiment of the present invention, the knowledge graph is, but is not limited to, a Resource Description Framework (RDF) Database (DB).

In an embodiment of the present invention, subsequent to generation of the knowledge graph, the relearning agent 120 is invoked for carrying out a relearning operation based on the one or more prompts received from the I/O unit 110 for effectively parsing and analyzing the first input type (i.e., legacy application code (e.g., COBOL, C/C++, Java, etc.)) and the second input type. In an exemplary embodiment of the present invention, the relearning agent 120 operates in conjunction with the LLM unit 122. Advantageously, relearning operation aids in extracting valuable insights from both the first input type (legacy application code) and the second input type (artifacts) for understanding the first input type's architecture, functionality, and dependencies. The relearning operation is carried out by the relearning agent 120 to determine the implemented rules associated with the first input type and generate a data dictionary comprising one or more variables present in the first input type. The second input type, comprising the unstructured data format is processed separately by the relearning agent 120 for determining variables and relationships between the variables present in the second input type.

In an embodiment of the present invention, the data processing unit 114 processes the first input type by employing one or more language parser-based deterministic tools (e.g., custom COBOL language tools such as CEAD^{®} tool, MDART^{®}) to determine a sequence information associated with the first input type. The language parser-based deterministic tools leverage a hybrid top-down extraction of insights including an application view and bottoms up approach on the first input type. The language parser-based deterministic tools break and determine the first input type in the form of the sequence information of the complete functionality and flow of the first input type, thereby generating comprehensive insights into each line of the first input type. The relearning agent 120 analyzes the determined sequence information of the first input type by employing the LLM agents based on one or more first prompt types having pre-defined structure for analyzing the first input type, which are provided via the I/O unit 110.

In an embodiment of the present invention, the first prompt type includes a first set of features specifically constructed to enable thorough analysis and extraction of the implemented rules from the legacy application code. The first set of features includes a first feature relating to identification of a functional feature level information of an application. The first set of features may also include a second feature relating to recognition of related first input type files for every functional feature of the application. The first set of features include a third feature relating to detailed identification and description of data structures, variables, and file definitions. The first set of features include a fourth feature relating to extraction and mapping of logic flow within the legacy code. The first set of features include a fifth feature relating to identification of conditions, calculations, and data manipulation operations. The first set of features include a sixth feature relating to systematic documentation and organization of the implemented rules identified. Advantageously, comprehensive feature set ensures robust and accurate extraction of implemented rules from complex legacy codebases.

An exemplary first prompt type for determining implemented rules from a COBOL code is provided below:

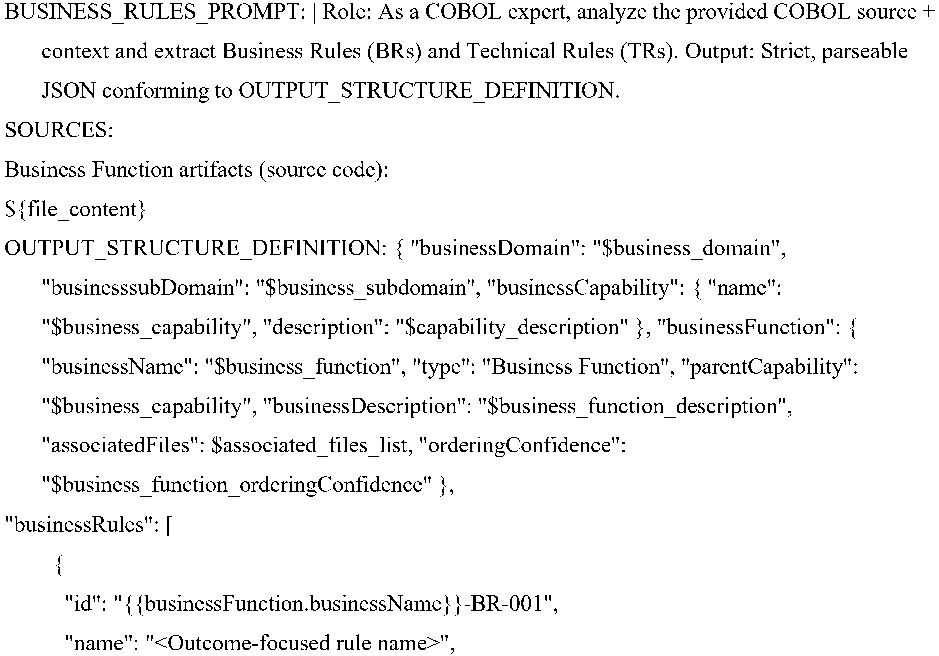

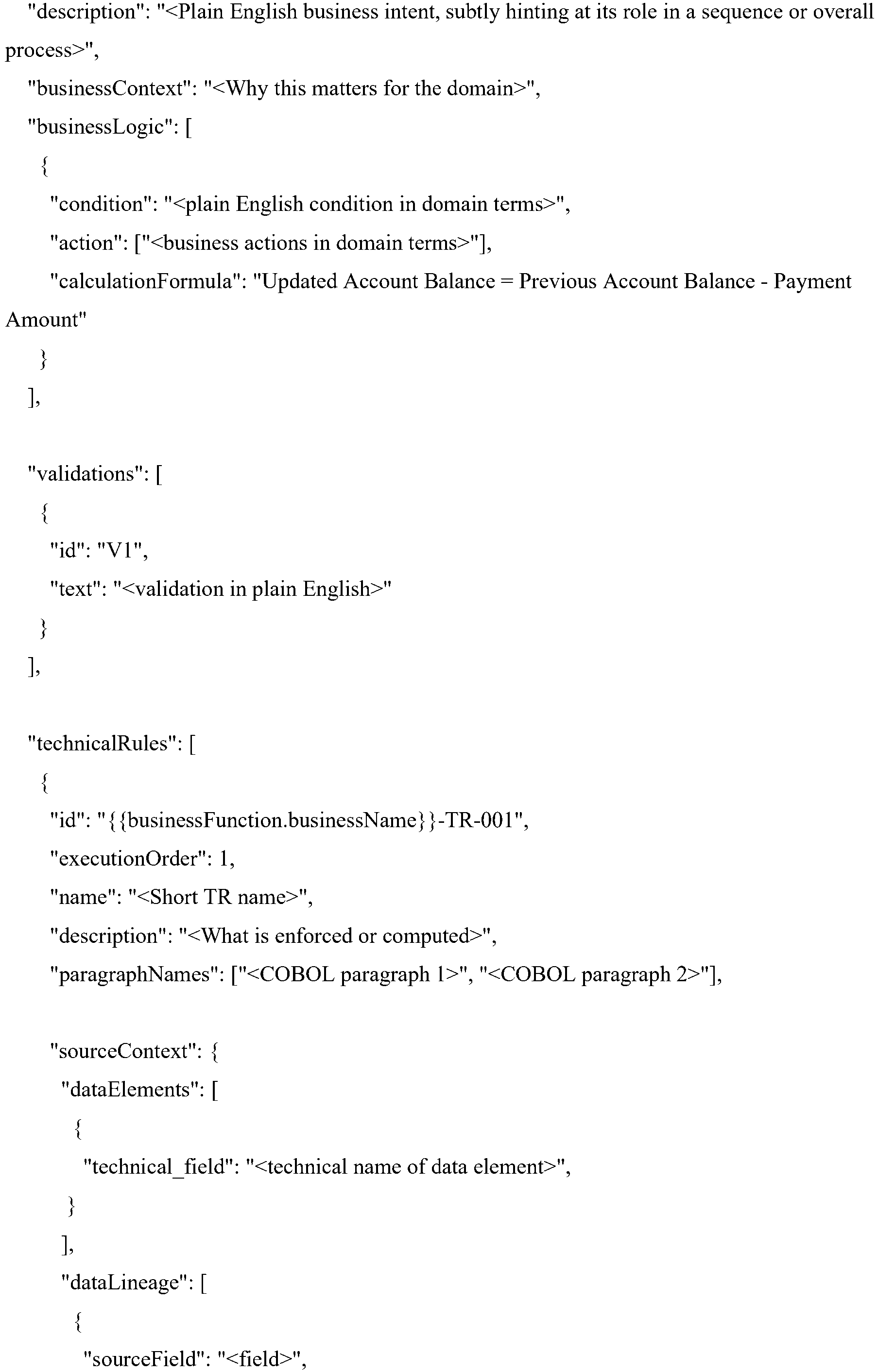

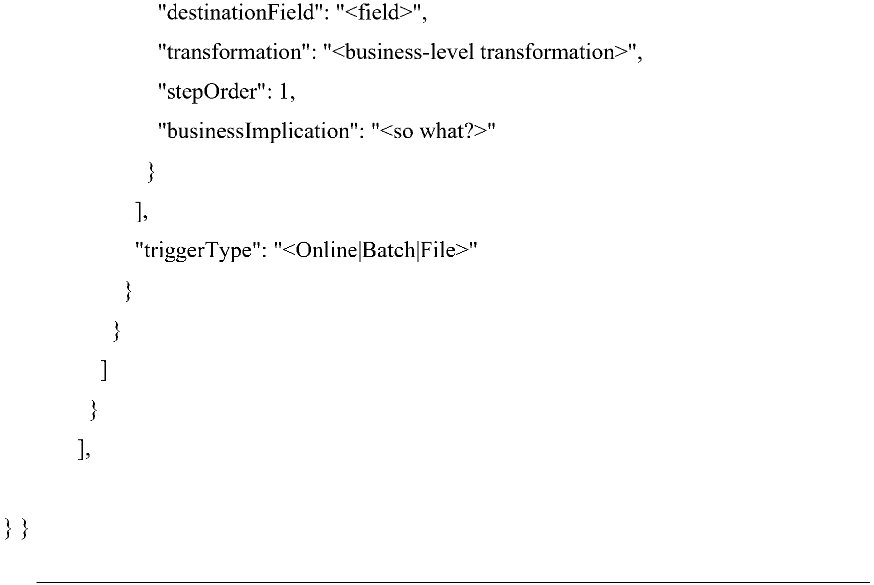

In an embodiment of the present invention, the relearning agent unit 120 annotates and parses the first input type by analyzing it in conjunction with the first prompt type to determine the corresponding implemented rules. By processing the first input type based on the sequence information, the LLM agents minimize the occurrence of hallucinations in their output. The determined implemented rules are stored in a cloud storage system associated with the knowledge base 118, using a predefined textual format such as Hyper Text Mark-up Language (HTML). The implemented rules are also represented in the knowledge graph using a standardized open format, including, but not limited to, Terse RDF Triple Language (TTL).

In an embodiment of the present invention, the second input type is processed by the relearning agent 120 based on its associated data and file type. The relearning agent 120 processes the second input type by using the first prompt type based on the specific data and file type. For example, if the second input type comprises an Excel file (such as .xlsx, .xls, .csv, etc.) including data in the form of unit cases and resolution notes, the relearning agent 120 processes the Excel file using the first prompt type. This processing enables the identification and determination of functions related to the unit cases and resolution notes. The extracted functions are systematically linked and integrated into the knowledge graph, thereby enhancing the overall structure and utility of the knowledge base. Furthermore, if the Excel file comprises a list of variable data along with their meanings, updated names, and table mapping details, then the variable data is mapped with the data dictionary table. In another example, if the second input type is a PDF file, the PDF file is processed by the relearning agent 120 to identify relationships among data present in the PDF file, which are then mapped and stored into the knowledge graph or the vector DB associated with the knowledge base 118.

In an embodiment of the present invention, the relearning agent 120 generates the data dictionary by executing a multi-step workflow. In one embodiment, the relearning agent 120 generates the data dictionary from the first input type received from the data processing unit 114. The relearning agent 120 employs a data dictionary parser that generates multiple foundational data fields comprising one or more field names and associated metadata from the first input type based on a second prompt type.

In an embodiment of the present invention, the second prompt type includes a second set of features specifically configured to enable thorough analysis and generation of the data dictionary from the legacy application code. The second set of features includes a first feature type relating to identification of all data items and variables within the legacy code. The second set of features include a second feature type relating to determination of data types, lengths, and formats for each identified variable. The second set of features includes a third feature type relating to description of the purpose and usage of each variable or data structure. The second set of features include a fourth feature type relating to mapping of variables to their corresponding files, records, or database structures. The second set of features include a fifth feature relating to identification of data transformations and dependencies between variables. The second set of features include a sixth feature type relating to systematic documentation and organization of the extracted data dictionary. Advantageously, this comprehensive feature set ensures robust and accurate extraction of a data dictionary from complex legacy codebases.

An exemplary second prompt type used for determining data dictionary from a COBOL code is provided below:

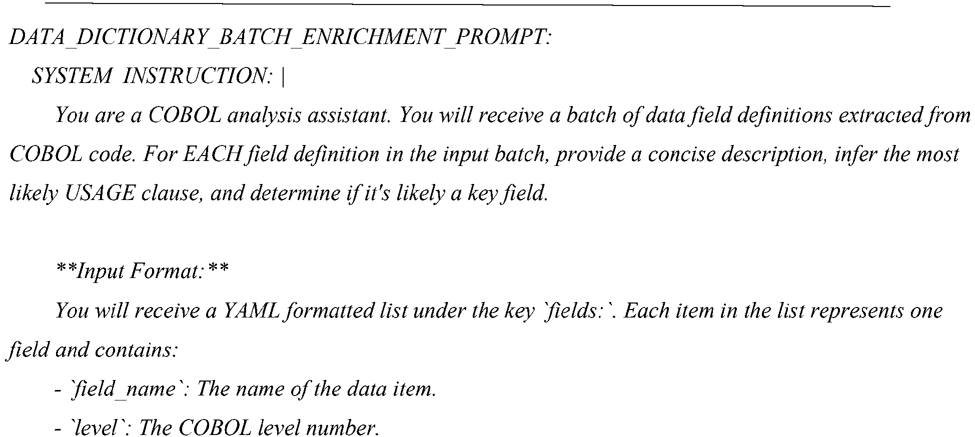

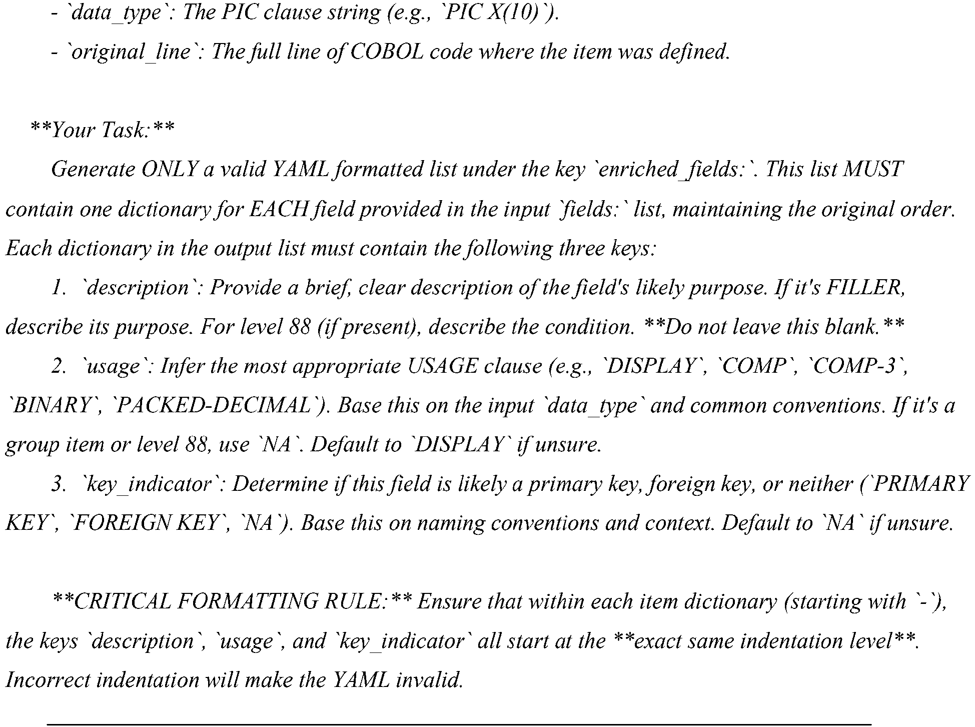

In another embodiment, the relearning agent 120 leverages the language parser-based deterministic tools (e.g., MDART^{®}) in the data processing unit 114 and updates the data dictionary from the first input type based on the first prompt type. The updates to the data dictionary include additional metadata corresponding to the data fields, and mapping information associated with each of the foundational data fields. The relearning agent 120 uses the determined implemented rules to generate the mapping information associated with each of the foundational data fields. The mapping information comprises specific inferred variables (such as a functional description) corresponding to the foundational data fields already generated by the language parser-based deterministic tools.

In an embodiment of the present invention, the generated data dictionary comprising of the variables corresponding to the first input type are stored in a Relational Database Management System Database (RDBMS DB) associated with the knowledge base 118. The knowledge base 118 is updated with respect to the provided prompts. In an embodiment of the present invention, the user (e.g., an SME) may access the implemented rules and data dictionaries stored in the knowledge base 118 and the knowledge graph for validating, annotating, and updating the stored implemented rules and data dictionaries.

In an embodiment of the present invention, subsequent to the relearning process, users can progressively analyze the Knowledge Graph using the application user interface. Users can select on relevant programs and select the relevant nodes and relationships to populate the graph. Furthermore, users can generate the Knowledge graph with all the nodes and relationships at once. The knowledge graph is analyzed for determining the context of the first input type and the second input type data stored in the knowledge graph. The knowledge graph data retrieved from knowledge base 118 is processed by the LLM agent for rendering as an output via the UI on the I/O unit 110. Further, the user interaction with the knowledge graph comprising the user prompts provided by the user, the nature of LLM agent used and the type of data retrieved is subsequently stored in the knowledge graph for carrying out relearning process and optimization of the output generation. The Knowledge Graph Generation unit 116 leverages the centralized Knowledge Base 118 that contains standardized ontologies defining the structure and meaning of the first input type and the generated output artifacts from the relearning process.

In an embodiment of the present invention, the data processing unit 114 derives and reconstructs workflows from the first input type and second input type. An integrated analysis of Abstract Syntax Trees (ASTs) and Abstract Semantic Graphs (ASGs) is utilized to extract both syntactic and semantic relationships across the first input type and second input type to derive and reconstruct the workflows. In an embodiment of the present invention, ASTs are generated by parsing each of the first and second input types and forming a structured and hierarchical representation wherein the syntactic organization, execution order, scoping, and dependency of the underlying constructs are captured while formats and language-specific details are abstracted. In an embodiment of the present invention, ASGs are generated by semantic interpretation of the ASTs to infer meaning, intent and domain relevance. Further, the interpreted constructs are converted into a graph wherein the nodes represent semantic concepts and edges represent inferred relationships. Each semantic element is traceably linked back to the originating AST constructs. In an exemplary embodiment of the present invention, by combining control flow reconstruction, program call mapping and data flow inference, the data processing unit 114 deterministically generates structured workflow representations.

In an embodiment of the present invention, the interface unit 124 enables the subsystem 102 to communicate with the external tools for downstream modernization activities associated with the first input type (i.e. source code) based on one or more prompts received via the I/O unit 110. Examples of downstream modernization activities include generation of agile artifacts, generation of target state architecture etc. In an embodiment of the present invention, the interface unit 124 communicates with the knowledge base 118 for fetching the knowledge graph, the implemented rules, the workflows and data dictionary for enabling the downstream modernization activities.

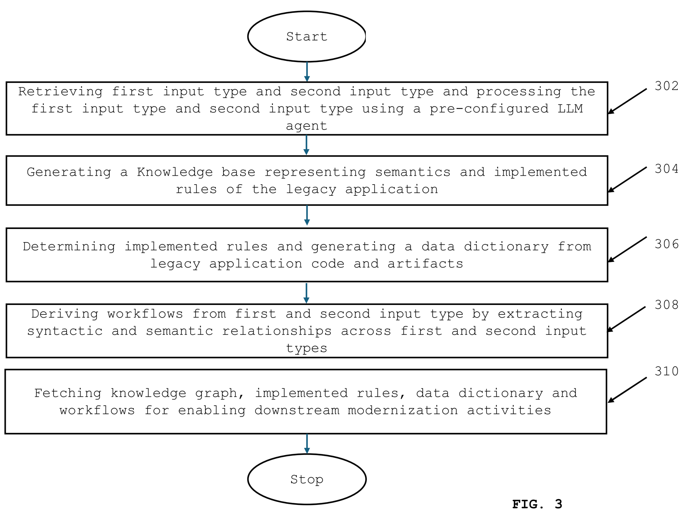

FIG. 3 illustrates an artificial intelligence-based method for enabling modernization of legacy applications through ontology-based knowledge extraction and relearning, in accordance with an embodiment of the present invention.

At step 302, a first input type and a second input type are retrieved and processed using a pre-configured LLM agent and deterministic language parser-based tools. In an embodiment of the present invention, one or more inputs are retrieved from different data sources. The one or more inputs include a first input type and a second input type. In an exemplary embodiment of the present invention, the first input type is in structured and semi-structured data format, including source code files such as COBOL files, .cpy files, .jcl files, and other formats associated with the legacy application code (or source code applications). The second input type is in an unstructured data format and comprises one or more artifact files associated with the source code, which provides insights on the working of the source code application. The artifact files may include, but are not limited to, PDF files, text files, documents, transcripts, and test case files.

In an embodiment of the present invention, the first input type and the second input type are independently processed. A pre-configured LLM agent is utilized to process both the first input type and the second input types. In an example, the LLM agent may include, but is not limited to, Gemini^{®} and Claude^{®}. In an exemplary embodiment of the present invention, asynchronous and multithreading techniques are employed to efficiently execute LLM agent-based operations. The LLM agent processes a set of predefined prompts to facilitate processing of the first input type and the second input types. Based on the defined prompts, the first and second input types are processed in a pre-defined manner for generating a pre-defined output from the LLM agent.

In an embodiment of the present invention, if the files associated with the first input type and the second input type are small in size, then the LLM agent is configured to directly process the first input type and the second input type. In another embodiment of the present invention, if the files associated with the first input type and the second input type are large in size, then the LLM agents process the first input type and the second input type by carrying out a partitioning operation on content of the files by employing the pre-defined prompts for segmenting the first input type and the second input type.

In an embodiment of the present invention, the LLM agent uses the segmented first input type and the second input type for generating summaries of the first input type and the second input type (first summary). The generated summary of the first input type and the second input type is transmitted to a vector DB for storage in a vectorized form. In another embodiment of the present invention, the second input type is processed separately for extracting information as data including, but not limited to, tables, images, diagrams present therein and provided to a different LLM agent for generating a second summary. The generated second summary is stored with the first summary of the first input type and the second input type in the vector DB.

At step 304, a knowledge graph is generated representing semantics and implemented rules of the legacy application. In an embodiment of the present invention, the processed first input type and the second input type are received along with a pre-defined domain standards data which includes data related to compliance and regulatory best practices associated with the first input type. The first and second summaries of the first input type and the second input type and the first and the second input types are converted into a knowledge graph by implementing LLM agents based on the pre-defined prompts.

In an embodiment of the present invention, the knowledge graph comprises a representation of semantics of the first input type and implemented rules associated with the first input type. In an example, the implemented rules comprise all the constraints, and requirements to implement software functions. The knowledge graph provides unified visualization of insights, key features and relationships within the first input type and the second input type in a subject, object, and/or predicate form. In an example, the knowledge graph captures entities and relationships with semantic meanings enabling users to generate inferences and draw actionable insights related to a legacy application source code's architecture, components, relationships, functionalities and artifacts. In an exemplary embodiment of the present invention, the user may interact with the knowledge graph using a user-friendly application user interface employing APIs to provide consistency in accessing whole or a subset of knowledge graph.

Additionally, one or more autonomous chatbots and/or AI agents can access the knowledge graph through APIs. Users may submit queries related to the initial input type in natural language via the application user interface. LLM agents are utilized to generate detailed and contextually relevant responses to these queries. In one embodiment, the most relevant knowledge graph is retrieved for a given prompt by performing a similarity search operation with a top-k parameter and ranking the associated documents based on their similarity scores. The stored knowledge graph are then reordered according to these scores to present the optimal result. In another embodiment, the knowledge graph is maintained in turtle format.

At step 306, implemented rules are determined and a data dictionary is generated from legacy application code and artifacts. In an embodiment of the present invention, subsequent to generation of the knowledge graph, a relearning operation is executed based on one or more prompts for effectively parsing and analyzing the first input type (i.e., legacy application code (e.g., COBOL, C/C++, Java, etc.)) and the second input type. In an embodiment of the present invention, the relearning operation is carried out through an LLM agent. Advantageously, relearning operation aids in extracting valuable insights from both the first input type (legacy application code) and the second input type (artifacts) for understanding the first input type's architecture, functionality, and dependencies. The relearning operation is carried out by determining implemented rules associated with the first input type and generating the data dictionary comprising one or more variables present in the first input type. The second input type, comprising the unstructured data format is processed separately for determining variables and relationships between the variables present in the second input type.

In an embodiment of the present invention, the first input type is processed by employing one or more language parser-based deterministic tools (e.g., a CEAD^{®} tool, MDART^{®} tool) to determine a sequence information associated with the first input type. The language parser-based deterministic tools leverage a hybrid top-down extraction of insights including an application view and bottoms up approach on the first input type. The language parser-based deterministic tools break and determine the first input type in the form of the sequence information of the complete functionality and flow of the first input type, thereby generating comprehensive insights into each line of the first input type. Further, the determined sequence information of the first input type is analyzed by employing the LLM agents based on one or more first prompt types having pre-defined structure for analyzing the first input type.

In an embodiment of the present invention, the first prompt type includes a first set of features specifically configured to enable thorough analysis and extraction of the implemented rules from the legacy application code. The first set of features includes a first feature relating to identification of a functional feature level information of an application. The first set of features may also include a second feature relating to recognition of related first input type files for every functional feature of the application. The first set of features include a third feature relating to detailed identification and description of data structures, variables, and file definitions. The first set of features include a fourth feature relating to extraction and mapping of logic flow within the legacy code. The first set of features include a fifth feature relating to identification of conditions, calculations, and data manipulation operations. The first set of features include a sixth feature relating to systematic documentation and organization of the implemented rules identified. Advantageously, comprehensive feature set ensures robust and accurate extraction of implemented rules from complex legacy codebases.

An exemplary first prompt type for determining implemented rules from a COBOL code is provided below:

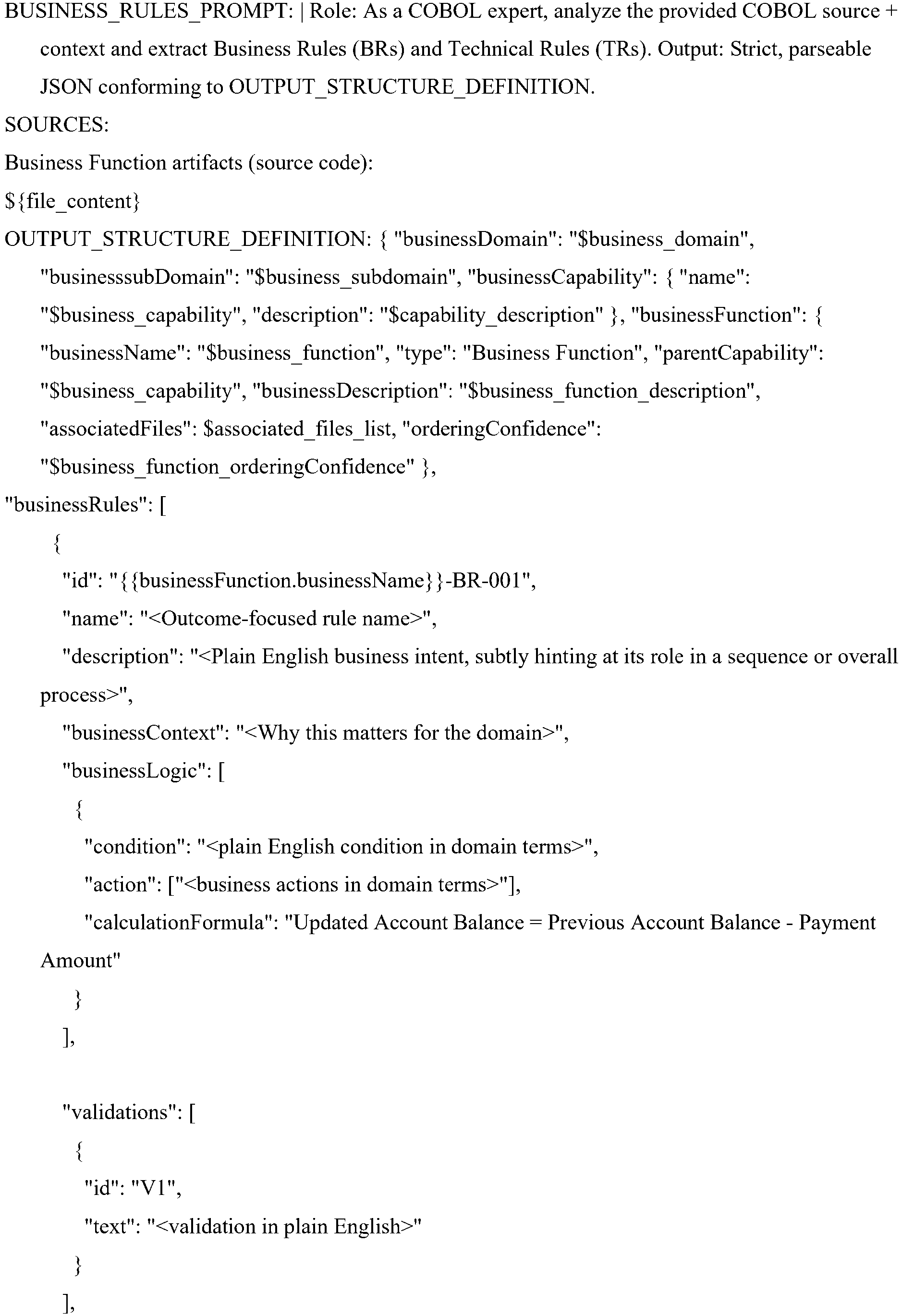

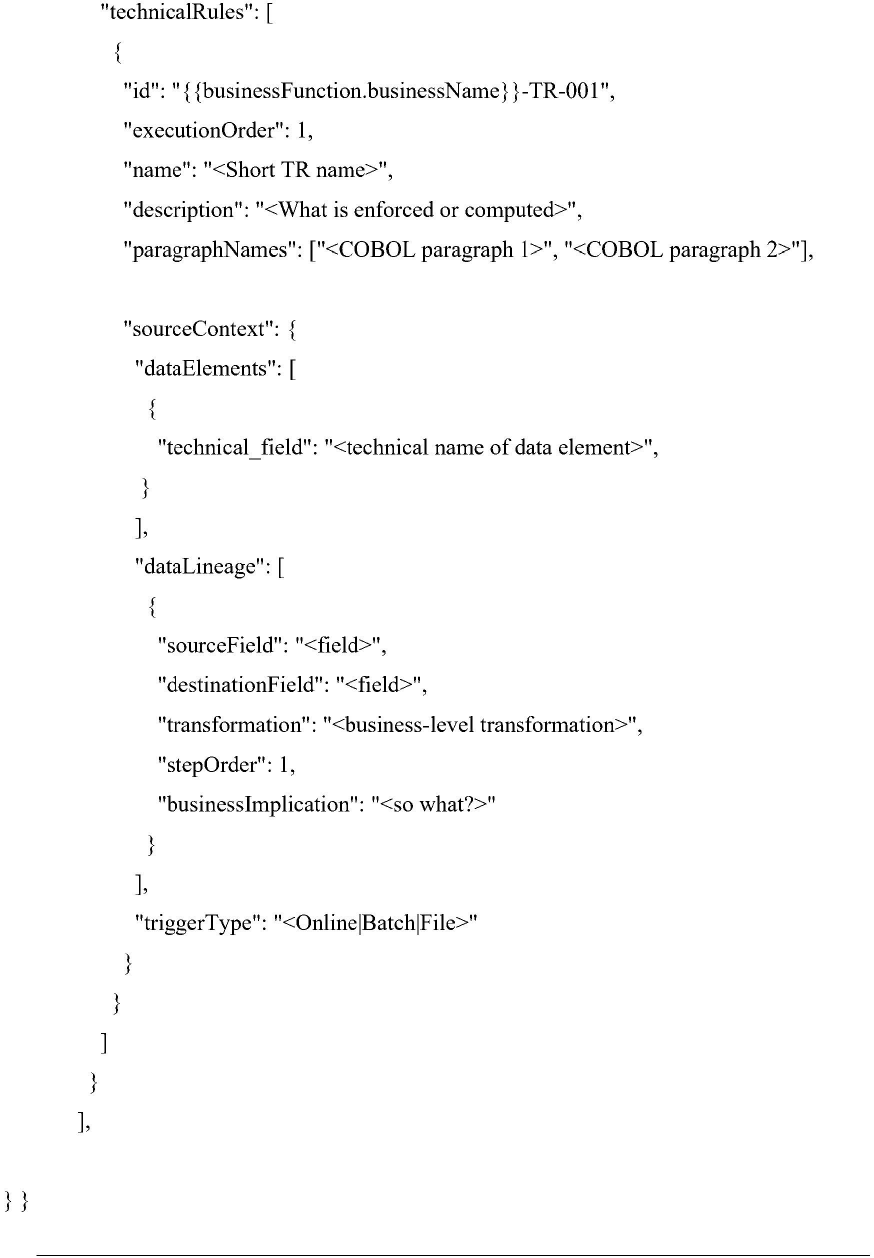

In an embodiment of the present invention, the first input type is annotated and parsed by analyzing it in conjunction with the first prompt type to determine the corresponding implemented rules. By processing the first input type in the form of the sequence information, the LLM agents minimize the occurrence of hallucinations in their output. The determined implemented rules are stored in a cloud storage system, using a predefined textual format such as Hyper Text Mark-up Language (HTML). The implemented rules are also represented in the knowledge graph using a standardized open format including, but not limited to, Terse RDF Triple Language (TTL).

In an embodiment of the present invention, the second input type is processed based on its associated data and file type. The second input type is processed by using the first prompt type based on specific data and file type. For example, if the second input type comprises an Excel file (such as .xlsx, .xls, .csv, etc.) including data in the form of unit cases and resolution notes, the Excel file is processed using the first prompt type. This processing enables the identification and determination of functions related to the unit cases and resolution notes. The extracted functions are systematically linked and integrated into the knowledge graph, thereby enhancing the overall structure and utility of the knowledge base. Furthermore, if the Excel file comprises a list of variable data along with their meanings, updated names, and table mapping details, then the variable data is mapped with the data dictionary table. In another example, if the second input type is a PDF file, the PDF file is processed to identify relationships among data present in the PDF file, which are then mapped and stored into the knowledge graph or the vector DB.

In an embodiment of the present invention, a data dictionary is generated by executing a multi-step workflow. In one embodiment, the data dictionary is generated based on the first input type. A data dictionary parser is employed to generate multiple foundational data fields comprising one or more field names and associated metadata from the first input type based on a second prompt type.

In an embodiment of the present invention, the second prompt type includes a second set of features specifically configured to enable thorough analysis and generation of the data dictionary from the legacy application code. The second set of features includes a first feature type relating to identification of all data items and variables within the legacy code. The second set of features includes a second feature type relating to determination of data types, lengths, and formats for each identified variable. The second set of features includes a third feature type relating to description of the purpose and usage of each variable or data structure. The second set of features include a fourth feature type relating to mapping of variables to their corresponding files, records, or database structures. The second set of features include a fifth feature relating to identification of data transformations and dependencies between variables. The second set of features include a sixth feature type relating to systematic documentation and organization of the extracted data dictionary. Advantageously, this comprehensive feature set ensures robust and accurate generation of the data dictionary from complex legacy codebases.

An exemplary second prompt type used for determining the data dictionary from a COBOL code is provided below:

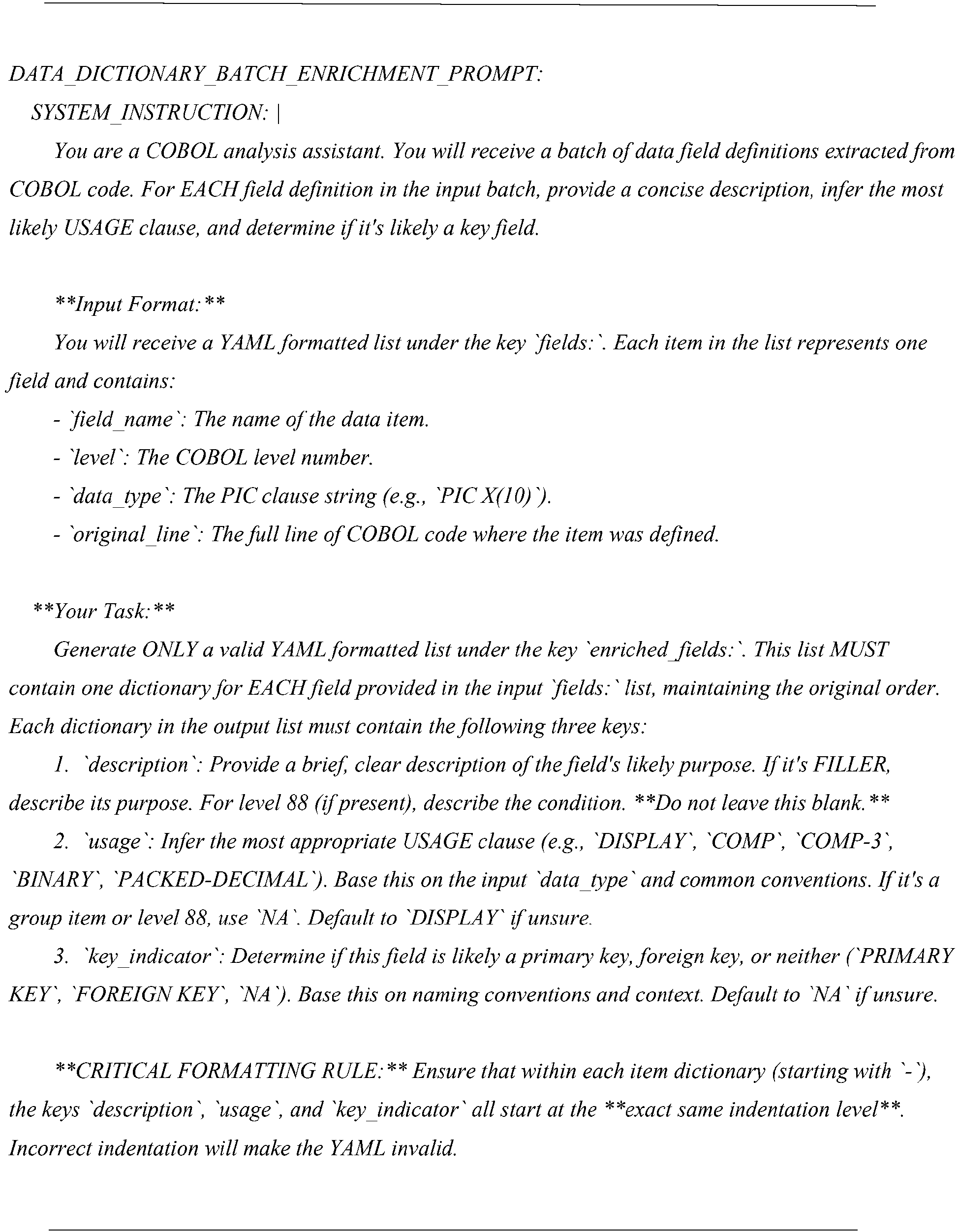

In another embodiment, the language parser-based deterministic tools (e.g., MDART^{®}) are leveraged to update the data dictionary from the first input type based on the first prompt type. The updates to the data dictionary include additional metadata corresponding to the foundational fields, and mapping information associated with each of the foundational data fields. The determined implemented rules are used to generate the mapping information associated with each of the foundational data fields. The mapping information comprises specific inferred variables (such as a functional description) corresponding to the foundational data fields already generated by the language parser-based deterministic tools.

In an embodiment of the present invention, the generated data dictionary comprising the variables associated with the first input type is stored in a Relational Database Management System Database (RDMS DB) associated with the knowledge base and the knowledge base, which is updated with respect to the provided prompts. In an embodiment of the present invention, the user (e.g., an SME) may access the implemented rules and the data dictionary from the knowledge base for validating, annotating, and updating the stored implemented rules and the data dictionary.

In an embodiment of the present invention, subsequent to the relearning process, a graph interface is leveraged by the users via the UI for analyzing the generated knowledge graph. Users can select relevant programs and relevant nodes and relationships to populate the graph. Furthermore, users can generate the knowledge graph with all the nodes and relationships at once. The knowledge graph is analyzed for determining the context of the first input type and the second input type data stored in the knowledge graph. The knowledge graph data retrieved from knowledge base 118 is processed by the LLM agent for rendering as an output via the UI on the I/O unit 110. Further, the user interaction with the knowledge graph comprising the user prompts provided by the user, the nature of LLM agent used and the type of data retrieved is subsequently stored in the knowledge graph for carrying out relearning process and optimization of the output generation. In an exemplary embodiment of the present invention, standardized ontologies defining the structure and meaning of the first input type and the generated output artifacts from the relearning process can be leveraged by the knowledge base 118.

At step 308, workflows are derived and reconstructed from the first input type and second input type. An integrated analysis of Abstract Syntax Trees (ASTs) and Abstract Semantic Graphs (ASGs) is utilized to extract both syntactic and semantic relationships across first input type and second input type to derive and reconstruct workflows. In an embodiment of the present invention, ASTs are generated by parsing each of the first and second input types and forming a structured and hierarchical representation wherein the syntactic organization, execution order, scoping, and dependency of the underlying constructs are captured while formatting and language-specific details are abstracted. In an embodiment of the present invention, ASGs are generated by semantic interpretation of the ASTs to infer meaning, intent and domain relevance. Further, the interpreted constructs are converted into a graph wherein the nodes represent semantic concepts and edges represent inferred relationships. Each semantic element traceably linked back to its originating AST constructs. In an exemplary embodiment of the present invention, by combining control flow reconstruction, program call mapping and data flow inference, the system deterministically generates structured workflow representations. The knowledge graph, the implemented rules, workflows and data dictionary are stored in the knowledge database 118.

At step 310, the knowledge graph, the implemented rules, workflows and the data dictionary are fetched from the knowledge base 118 for enabling generation of downstream modernization activities. In an embodiment of the present invention, the knowledge graph, the implemented rules and the data dictionary are fetched from the knowledge base 118 and employed for enabling downstream modernization activities comprising generation of agile artifacts and generation of target state architecture.

Advantageously, in accordance with various embodiments of the present invention, the present invention provides an artificial intelligence-based system and method for enabling modernization of complex legacy applications ontology driven knowledge extraction and relearning without loss of semantic equivalence. The present invention provides a deeper understanding of the legacy application's architecture, functionality, and dependencies, facilitating comprehensive modernization of legacy applications. Also, the present invention provides for generating a dynamic and comprehensive domain-specific knowledge graph for the application, capturing essential information from code, artifacts, and extracted insights, thereby empowering developers and stakeholders with a deeper understanding of the legacy application's intricacies. Further, the present invention provides for interacting with the knowledge graph through a user-friendly application user interface, which enables users to obtain detailed and relevant nodes and relationships to understand the existing application and the relearnt knowledge efficiently. Further, the present invention provides for identifying key entities, personas, and processes within a legacy application code.

Also, the present invention provides for analyzing functionalities of the legacy application code and mapping relationships for providing a granular understanding of the legacy application's structure and behavior. Furthermore, the present invention provides for employing the pre-defined prompts and LLMs to automatically analyze existing code and documentation, extracting valuable insights to help understand the legacy application as is and derive relevant relearnt artifacts such as implemented rules and data dictionary which can be leveraged downstream in the modernization journey. The automated approach significantly reduces time and effort required for manual workflow creation while ensuring accuracy and alignment with the legacy application code requirements. Yet further, the present invention provides for simplifying the legacy application code modernization process by providing a high level of transparency, efficiency, and accuracy. Also, the present invention provides a seamless integration of modernization solution for legacy applications with confidence, by reducing time-to-market and cost while ensuring a smooth transition to modem technologies.

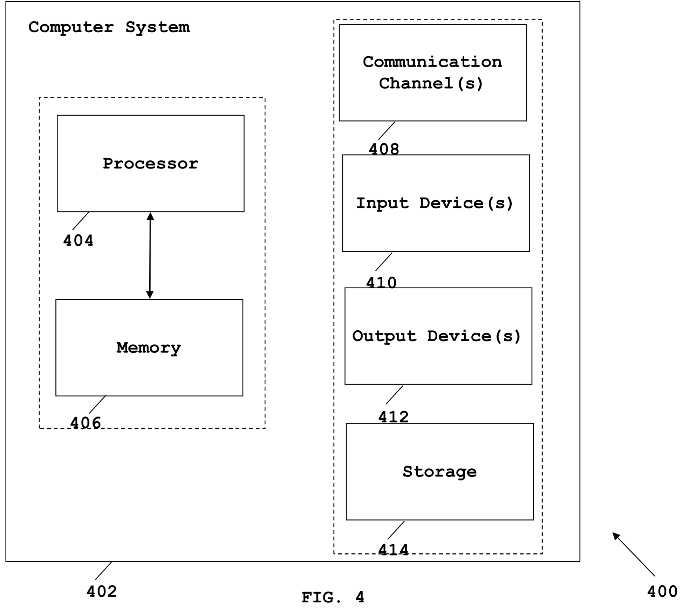

FIG. 4 illustrates an exemplary computer system 402 in which various embodiments of the present invention may be implemented. The computer system 402 comprises a processor 404 and a memory 406. The processor 404 executes program instructions and is a real processor. The computer system 402 is not intended to suggest any limitation as to the scope of use or functionality of described embodiments. For example, the computer system 402 may include, but not limited to, a programmed microprocessor, a microcontroller, a peripheral integrated circuit element, and other devices or arrangements of devices that are capable of implementing the steps that constitute the method of the present invention. In an embodiment of the present invention, the memory 406 may store software for implementing various embodiments of the present invention. The computer system 402 may have additional components. For example, the computer system 402 includes one or more communication channels 408, one or more input devices 410, one or more output devices 412, and storage 414. An interconnection mechanism (not shown) such as a bus, controller, or network, interconnects the components of the computer system 402. In various embodiments of the present invention, operating system software (not shown) provides an operating environment for various software executing in the computer system 402 and manages different functionalities of the components of the computer system 402.

The communication channel(s) 408 allows communication over a communication medium to various other computing entities. The communication medium provides information such as program instructions, or other data in a communication media. The communication media includes, but not limited to, wired or wireless methodologies implemented with an electrical, optical, RF, infrared, acoustic, microwave, Bluetooth, or other transmission media.

The input device(s) 410 may include, but not limited to, a keyboard, mouse, pen, joystick, trackball, a voice device, a scanning device, touch screen or any another device that can provide input to the computer system 402. In an embodiment of the present invention, the input device(s) 410 may be a sound card or similar device that accepts audio input in analog or digital form. The output device(s) 412 may include, but not limited to, a user interface on CRT or LCD, printer, speaker, CD/DVD writer, or any other device that provides output from the computer system 402.

The storage 414 may include, but not limited to, magnetic disks, magnetic tapes, CD-ROMs, CD-RWs, DVDs, flash drives, cloud storage, or any other medium which can be used to store information and can be accessed by the computer system 402. In various embodiments of the present invention, the storage 414 contains program instructions for implementing the described embodiments.

The present invention may suitably be embodied as a computer program product for use with the computer system 402. The method described herein is typically implemented as a computer program product, comprising a set of program instructions which is executed by the computer system 402 or any other similar device. The set of program instructions may be a series of computer readable codes stored on a tangible medium, such as a computer readable storage medium (storage 414), for example, diskette, CD-ROM, ROM, flash drives or hard disk, or transmittable to the computer system 402, via a modem or other interface device, over either a tangible medium, including but not limited to optical or analogue communications channel(s) 408. The implementation of the invention as a computer program product may be in an intangible form using wireless techniques, including, but not limited to microwave, infrared, Bluetooth, or other transmission techniques. These instructions can be preloaded into a system or recorded on a storage medium such as a CD-ROM or made available for downloading over a network such as the internet or a mobile telephone network. The series of computer readable instructions may embody all or part of the functionality previously described herein.

The present invention may be implemented in numerous ways including as a system, a method, or a computer program product such as a computer readable storage medium or a computer network wherein programming instructions are communicated from a remote location.

While the exemplary embodiments of the present invention are described and illustrated herein, it will be appreciated that they are merely illustrative. It will be understood by those skilled in the art that various modifications in form and detail may be made therein without departing from the scope of the invention.

## Claims

1. A system (100) for artificial intelligence-based modernization of legacy applications through ontology driven knowledge extraction and relearning, the system (100) comprising:
a memory (108) storing program instructions; and
a processor (106) configured to execute the program instructions stored in the memory (108) and configured to execute a knowledge base building engine (104), the knowledge base building engine (104) configured to:
process a first input type and a second input type using a pre-configured Large Language Model (LLM) agent, wherein the first and second input types are retrieved via an input/output unit (110) from different data sources;
generate a knowledge graph representing semantics and implemented rules of the legacy application using the first input type and the second input type and first and second summaries of the first input type and second input type;
perform a relearning operation to determine implemented rules from the first input type using a first prompt type;
generate a data dictionary comprising variables present in the first input type by executing a multi-step workflow;
derive workflows from the first input type and second input type by extracting syntactic and semantic relationships across first input type and second input type; and
employ the knowledge graph, the implemented rules, the workflows and the data dictionary for enabling downstream modernization activities associated with the first input type.

2. The system (100) as claimed in claim 1, wherein the knowledge base building engine (104) comprises a data capturing unit 112 executed by the processor (106) and configured to receive the first input type and the second input type from the input/output unit (110), the first input type is in a structured and semi-structured data format comprising one or more source code files such as COBOL files, .cpy files, .jcl files, and other formats associated with a legacy application code, and the second input type is in an unstructured data format and comprises one or more artifact files associated with the legacy application code which provide insights on working of the legacy application code, wherein the artifact files include PDF files, text files, documents, transcripts, and test case files.

3. The system (100) as claimed in claim 1, wherein the knowledge base building engine (104) comprises a LLM unit (122) comprising the pre-configured LLM agent which is configured to:
process the first input type and the second input type when the files associated with the first input type and the second input type are small in size;
process the first input type and the second input type by a partitioning operation on content of the files by employing pre-defined prompts for segmenting the first input type and the second input type when the files associated with the first input type and the second input type are large in size; and
use a segmented first input type and the second input type for generating a first summary of the first input type and the second input type, wherein the generated first summary is transmitted to a vector database associated with a knowledge base (118) for storage in a vectorized form, wherein the second input type is processed separately for extracting information as data including tables, images, and diagrams and provided to a different LLM agent for generating a second summary, and wherein the generated second summary is stored with the first summary of the first input type and the second input type in the vector database associated with the knowledge base (118).

4. The system (100) as claimed in claim 1, wherein the knowledge base building engine (104) comprises a knowledge graph generation unit (116) executed by the processor (106) and configured to generate the knowledge graph comprising a representation of semantics of the first input type and implemented rules associated with the first input type, and wherein the knowledge graph provides unified visualization of insights, key features and relationships within the first input type and the second input type in a subject, object, and/or predicate form, and wherein the knowledge graph captures entities and relationships with semantic meaning enabling users to generate inferences and draw actionable insights related to a legacy application source code's architecture, components, relationships, functionalities and artifacts, and wherein the generated knowledge graph is stored in a knowledge base (118).

5. The system (100) as claimed in claim 1, wherein the knowledge base building engine (104) comprises a relearning agent (120) configured to:
determine the implemented rules from the first input type based on a sequence information associated with the first input type which is determined by the data processing unit (114) by employing one or more language parser-based deterministic tools for processing the first input type, wherein the language parser-based deterministic tools break and determine the first input type in the form of the sequence information of complete functionality and flow of the first input type, thereby generating comprehensive insights into each line of the first input type; and
analyze the determined sequence information of the first input type by employing LLM agents associated with an LLM unit (122) based on the first prompt type having a pre-defined structure for analyzing the first input type received via a data capturing unit (112), wherein the second input type is processed separately for determining variables and relationships between variables present in the second input type, and wherein the first prompt type includes a first set of features specifically configured to enable analysis and extraction of the implemented rules from the legacy application code, the first set of features comprising:
a first feature relating to a functional feature level information of an application;
a second feature relating to recognition of related first input type files for every functional feature of the application;
a third feature relating to detailed identification and description of data structures, variables, and file definitions;
a fourth feature relating to extraction and mapping of logic flow within the legacy code;
a fifth feature relating to identification of conditions, calculations, and data manipulation operations; and
a sixth feature relating to systematic documentation and organization of the implemented rules identified.

6. The system (100) as claimed in claim 5, wherein the relearning agent (120) is configured to:
annotate and parse the first input type by analyzing it in conjunction with the first prompt type to accurately determine the corresponding implemented rules; and
process the second input type based on its associated data and file, wherein the relearning agent (120) processes the second input type by using the first prompt type, considering the specific data and file type.

7. The system (100) as claimed in claim 5, wherein the relearning agent (120) is configured to generate the data dictionary from the first input type by executing a multi-step workflow that comprises:
generating the data dictionary from the first input type received from a data processing unit (114) based on a second prompt type using a data dictionary parser, wherein the data dictionary comprises multiple foundational data fields comprising one or more field names and associated metadata, and wherein the second prompt type includes a second set of features configured to enable analysis and generation of the data dictionary from the legacy application code, wherein the second set of features comprises:
a first feature type relating to identification of all data items and variables within the legacy code;
a second feature type relating to determination of data types, lengths, and formats for each identified variable;
a third feature type relating to description of purpose and usage of each variable or data structure;
a fourth feature type relating to mapping of variables to their corresponding files, records, or database structures;
a fifth feature relating to identification of data transformations and dependencies between variables; and
a sixth feature type relating to systematic documentation and organization of the extracted data dictionary; and
updating the data dictionary from the first input type by using the language-parser based deterministic tools based on the first prompt type, wherein the updates to the data dictionary include additional metadata corresponding to the foundational data fields, and mapping information associated with each of the foundational data fields, and wherein the mapping information comprises specific inferred variables corresponding to the foundational data fields already generated by the language parser-based deterministic tools

8. A method for artificial intelligence-based modernization of legacy applications through ontology driven knowledge extraction and relearning, wherein the method is implemented by a processor (106) executing program instructions stored in a memory (108), the method comprising steps of:
processing a first input type and a second input type using a pre-configured Large Language Model (LLM) agent, wherein the first and second input types are retrieved via an Input/Output unit (110) from different data sources;
generating a knowledge graph representing semantics and implemented rules of the legacy application using the first input type and the second input type and first and second summaries of the first input type and second input type;
performing a relearning operation to determine implemented rules from the first input type using a first prompt type; and
generating a data dictionary comprising variables present in the first input by executing a multi-step workflow;
deriving workflows from the first input type and second input type by extracting syntactic and semantic relationships across first input type and second input type; and
employing the knowledge graph, the implemented rules, the workflows and the data dictionary for enabling downstream modernization activities associated with the first input type.

9. The method as claimed in claim 8, wherein the first input type is in a structured data and semi-structured data format comprising one or more source code files such as COBOL files, .cpy files, .jcl files, and other formats associated with a legacy application code, and wherein the second input type is in an unstructured data format and comprises one or more artifact files associated with the legacy application code which provide insights on working of the legacy application code, wherein the artifact files include PDF files, text files, documents, transcripts, and test case files.

10. The method as claimed in claim 8, wherein the step of processing the first input type and the second input type comprises the steps of:
processing the first input type and the second input type when the files associated with the first input type and the second input type are small in size;
processing the first input type and the second input type by a partitioning operation on content of the files by employing pre-defined prompts for segmenting the first input type and the second input type when the files associated with the first input type and the second input type are large in size; and
using a segmented first input type and the second input type for generating a first summary of the first input type and the second input type, wherein the generated first summary of the first input type and the second input type is transmitted to a vector database for storage in a vectorized form, wherein the second input type is processed separately for extracting information as data including tables, images, and diagrams present therein, and provided to a different LLM agent for generating a second summary, and wherein the generated second summary is stored with the first summary of the first input type and the second input type in the vector database.

11. The method as claimed in claim 8, wherein the knowledge graph comprises a representation of semantics of the first input type and implemented rules associated with the first input type, and wherein the knowledge graph provides unified visualization of insights, key features and relationships within the first input type and the second input type in a subject, object, and/or predicate form, and wherein the knowledge graph captures entities and relationships with semantic meaning enabling users to generate inferences and draw actionable insights related to a legacy application source code's architecture, components, relationships, functionalities and artifacts.

12. The method as claimed in claim 8, wherein the steps of determining the implemented rules comprises the step of:
determining a sequence information associated with the first input type by employing one or more language parser based deterministic tools, wherein the language parser-based deterministic tools break and determine the first input type in the form of the sequence information of complete functionality and flow of the first input type, thereby generating comprehensive insights into each line of the first input type; and
analyzing the determined sequence information of the first input type by employing LLM agents based on the first prompt type having a pre-defined structure for analyzing the first input type, and wherein the second input type is processed separately for determining variables and relationships between variables present in the second input type, and wherein the first prompt type includes a first set of features specifically configured to enable analysis and extraction of the implemented rules from the legacy application code, the first set of features comprising:
a first feature relating to a functional feature level information of an application;
a second feature relating to recognition of related first input type files for every functional feature of the application;
a third feature relating to detailed identification and description of data structures, variables, and file definitions;
a fourth feature relating to extraction and mapping of logic flow within the legacy code;
a fifth feature relating to identification of conditions, calculations, and data manipulation operations; and
a sixth feature relating to systematic documentation and organization of the implemented rules identified.

13. The method as claimed in claim 8, wherein the relearning operation comprises the steps of:
annotating and parsing the first input type by analyzing it in conjunction with the first prompt type to accurately determine the corresponding implemented rules; and
processing the second input type based on its associated data and file, wherein the second input type is processed by using the first prompt type based on specific data and file type.

14. The method as claimed in claim 8, wherein the step of generating the data dictionary by executing the multi-step workflow comprises the steps of:
generating the data dictionary from the first input type based on a second prompt type using a data dictionary parser, wherein the data dictionary comprises multiple foundational data fields including one or more field names and associated metadata from the source code associated with the first input type, and wherein the second prompt type includes a second set of features specifically configured to enable analysis and generation of the data dictionary from the legacy application code, wherein the second set of features includes:
a first feature type relating to identification of all data items and variables within the legacy code;
a second feature type relating to determination of data types, lengths, and formats for each identified variable;
a third feature type relating to description of the purpose and usage of each variable or data structure;
a fourth feature type relating to mapping of variables to their corresponding files, records, or database structures;
a fifth feature relating to identification of data transformations and dependencies between variables; and
a sixth feature type relating to systematic documentation and organization of the extracted data dictionary; and
updating the data dictionary from the first input type by using the language-parser based deterministic tools, wherein the updates to the data dictionary include additional metadata corresponding to the foundational data fields, and mapping information associated with each of the foundational data fields, and wherein the mapping information comprises specific inferred variables corresponding to the foundational data fields already generated by the language parser-based deterministic tools.
